# EUROPEAN PATENT APPLICATION

(11) **EP 4 628 312 A1**
(43) Date of publication of application: **08.10.2025**
(21) Application number: 22967057.5
(22) Date of filing: 28.11.2022
(51) Int. Cl.: B41J 21/16, B41J 2/01

(54) **INKJET RECORDING DEVICE**

(71) Applicant: Hitachi Industrial Equipment Systems Co., Ltd., Tokyo 101-0021 (JP)
(72) Inventor: KAWANO Takashi, Tokyo 101-0021 (JP)
(74) Representative: MERH-IP Matias Erny Reichl Hoffmann Patentanwälte PartG mbB
(86) International application number: PCT/JP2022/043711
(87) International publication number: WO 2024/116220

(57) **Abstract**

An inkjet recording device comprises a code reading unit that reads code data from an information code; a storage unit that stores a code template that defines a position of information indicating a print target in the code data and a print position of the print target with respect to a printing object, the code template being used in analysis of the code data; a control unit that creates print data for printing the print target on the print position.

## Description

### Technical Field

The present invention relates to an inkjet recording device.

### Background Art

Patent document 1 discloses an inkjet recording device (hereinafter referred to as a "conventional device") that prints characters, figures, etc. on the surface or packaging of a product that is a printing object, using ink particles ejected from a nozzle. The conventional device is equipped with a bar code reader that reads a bar code attached to a product and a plurality of print data that are stored. By reading the bar code with the bar code reader, the conventional device identifies the manufacturer and product type code indicated by the bar code, and selects the print data corresponding to the identified code from the plurality of print data. This allows the conventional device to easily and error-free print the content that matches the printing object.

### Citation list

### Patent Literature

PTL 1: Japanese Patent Application Laid-Open No. 2000-343782

### Summary of Invention

### Technical Problem

However, with conventional devices, the print data corresponding to the manufacturer and product type code indicated by the bar code for each product must be registered in detail in the conventional device by manual input, etc., and input errors may occur at the registration stage. The conventional device cannot flexibly change the layout of multiple print elements in the printing area. If this were to be changed, the program for setting the layout of the print elements would have to be changed, which would be very time-consuming.

The present invention was made to solve the above problem. That is, one of the purposes of the present invention is to provide an inkjet recording device that can easily handle printing in various print contents and layouts.

### Solution to Problem

To solve the above problem, an inkjet recording device of the present invention comprises:
a code reading unit that reads code data from an information code;
a storage unit that stores a code template that defines a position of information indicating a print target in the code data and a print position of the print target with respect to a printing object, the code template being used in analysis of the code data;
a control unit that creates print data for printing the print target on the print position based on the code data and the code template corresponding to the code data.

### Advantageous Effect

The present invention can easily handle printing in various print contents and layouts.

### Brief Description of Drawings

[FIG. 1] Fig. 1 shows a schematic diagram of an example configuration of an inkjet recording device.
[FIG. 2] Fig. 2 is a functional block diagram showing an example configuration of an inkjet recording device.
[FIG. 3A] Fig. 3A shows an example of a CSV file used in a code template registration operation.
[FIG. 3B] Fig. 3B illustrates an example of the code template.
[FIG. 4A] Fig. 4A illustrates an example of code data.
[FIG. 4B] Fig. 4B illustrates an example of an information stored code template.
[FIG. 4C] Fig. 4C illustrates a printing example.
[FIG. 5A] Fig. 5A shows another example of a CSV file used for the code template registration operation.
[FIG. 5B] Fig. 5B illustrates another example of a code template.
[FIG. 6A] Fig. 6A illustrates another example of code data.
[FIG. 6B] Fig. 6B illustrates another example of the information stored code template.
[FIG. 6C] Fig. 6C illustrates the print setting data table.
[FIG. 6D] Fig. 6D illustrates a printing example.
[FIG. 7] Fig. 7 is a flowchart showing the processing flow of the code template registration process executed by the code template creation unit.
[FIG. 8] Fig. 8 shows a flowchart of the processing flow of printing operations executed by the arithmetic unit.

### Description of Embodiments

The following is a description of the embodiment of the present invention with reference to the drawings. In all figures of the embodiments, identical or corresponding parts may be marked with the same symbol. In the following description, various types of information may be described in terms of tables, rows and columns, etc., but various types of information may be expressed in data structures other than these. When describing identification information, expressions such as "ID," "name," and "number" are used, but these can be replaced with each other. In the following description, the functional block may be used as the subject to explain the process, but the subject of the process may be an MPU, processor, or device instead of the functional block.

### <<Embodiment>>

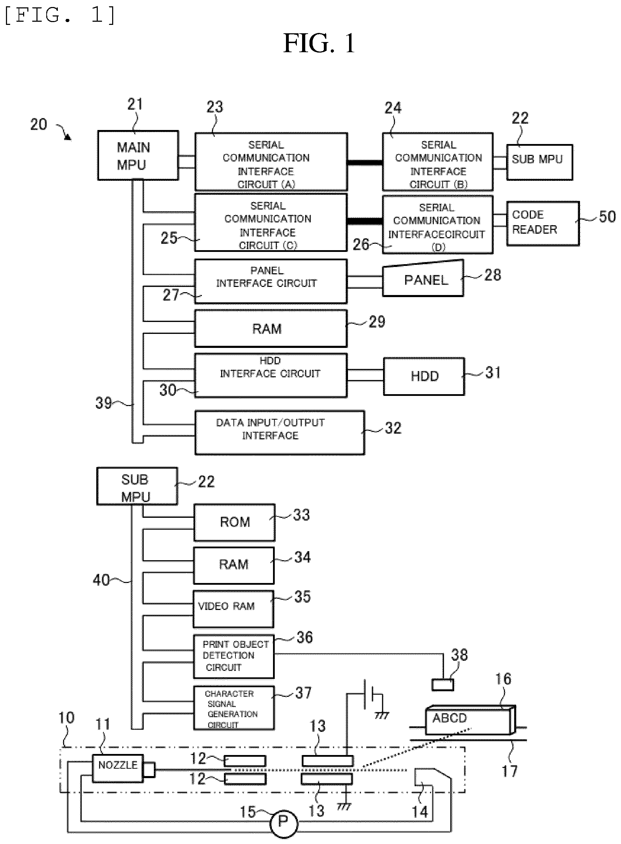

The following is a description of an inkjet recording device in accordance with an embodiment according to the present invention. Fig. 1 is a schematic diagram showing an example configuration of an inkjet recording device according to an embodiment of the present invention. As shown in Fig. 1, the inkjet recording device includes a nozzle head 10, a main unit 20, and a code reader 50.

The nozzle head 10 includes a nozzle 11 that ejects ink particles, a charged electrode 12 that charges the ejected ink particles, a deflecting electrode 13 that deflects the charged ink particles in the direction of flight, and a gutter 14 that collects ink particles not used for printing. Ink is supplied to the nozzle 11 under pressure by a pump 15. The ink collected by the gutter 14 is also supplied to the nozzle 11 again by the pump 15.

A printing object 16, which is a product transported in the direction of the arrow on a transport line 17, is printed with ink particles ejected from the nozzle head 10.

The main unit 20 includes a Main MPU 21, a Sub MPU 22, a serial communication interface circuit (A) 23, a serial communication interface circuit (B) 24, a serial communication interface circuit (C) 25, a serial communication interface circuit (D) 26, a panel interface circuit 27, a panel 28, a RAM 29, a HDD interface circuit 30,a HDD 31, which is a nonvolatile storage device (storage medium) that can read and write information, a data input/output interface 32, a ROM 33, a RAM 34, a video RAM 35, a print object detection circuit 36, and a character signal generation circuit 37. The HDD 31 may also be referred to as the "storage unit" for convenience.

The inkjet recording device is controlled mainly by the Main MPU21 (Main Micro processing Unit) and the Sub MPU 22 (Sub Micro processing Unit). The Main MPU 21 controls the entire inkjet recording device. The Sub MPU 22 mainly controls printing. The Main MPU21 may also be referred to as the "control unit" for convenience.

Serial communication is performed between the Main MPU 21 and the Sub MPU 22 via the serial communication interface circuit (A) 23 and the serial communication interface circuit (B) 24. Serial communication is performed between the Main MPU 21 and the code reader 50 via the serial communication interface circuit (C) 25 and the serial communication interface circuit (D) 26. The panel 28, which is used to input information necessary for printing and related data, and the Main MPU 21 communicate via the panel interface circuit 27. The RAM 29 (random access memory) for temporarily storing data, and the HDD 31 (hard disk drive) for storing control programs and the like are provided. The HDD 31 communicates with the Main MPU21via the HDD interface circuit 30. Communication data, etc., is sent to the Main MPU 21 via a bus line 39, or is delivered from the Main MPU 21 to each circuit, etc. The data input/output interface 32 is an interface for inputting and outputting data to and from the outside (external devices, etc.).

The Sub MPU 22 is connected to the ROM 33 (read-only memory) that stores the print control program, the RAM 34 (random access memory) that temporarily stores data for print control, the video RAM 35 that stores data actually used for printing, the print object detection circuit 36 that detects the arrival of the printing object 16, a print object detection sensor 38, the character signal generation circuit 37 that converts the print content into a character signal, and the like. Data and other data for communication are sent to the Sub MPU 22 via a bus line 40, or delivered from the Sub MPU 22 to each circuit, etc.

Here is an overview of the basic operation of the inkjet recording device, from input of print data to completion of printing. The print data created based on code data, etc., is stored in the RAM 29. The Main MPU 21 converts the print data stored in the RAM 29 into a form that can be sent to the Sub MPU 22 via serial communication using a program stored in the HDD 31, and sends it to the Sub MPU 22 via the bus line 39, the serial communication interface circuit (A) 23 and the serial communication interface circuit (B) 24.

The Sub MPU 22 stores the transmitted print data in the RAM 34 via the bus line 40. After storing the data, the Sub MPU 22 converts the transmitted print data into staircase wave data according to the program stored in the ROM 33, and stores the data in the video RAM 35 via the bus line 40. When the print object detection sensor 38 detects the printing object 16, a command to start printing is sent to the Sub MPU 22 through the print object detection circuit 36 and the bus line 40. The Sub MPU22 takes the already prepared staircase wave data from the video RAM 35 and sends it to the character signal generation circuit 37 via the bus line 40. The character signal generation circuit 37 changes the received staircase wave data into a character signal and sends it to the charged electrode 12. Ink particles ejected from the nozzle 11 receive an electric charge in the charged electrode 12, are deflected by the deflecting electrode 13, fly toward the printing object 16, and adhere to the printing object 16 to form print. Uncharged ink particles that are not used for printing are collected from the gutter 14 and supplied back to the nozzle 11 by pump 15.

### <Overview of the operation of the present invention>

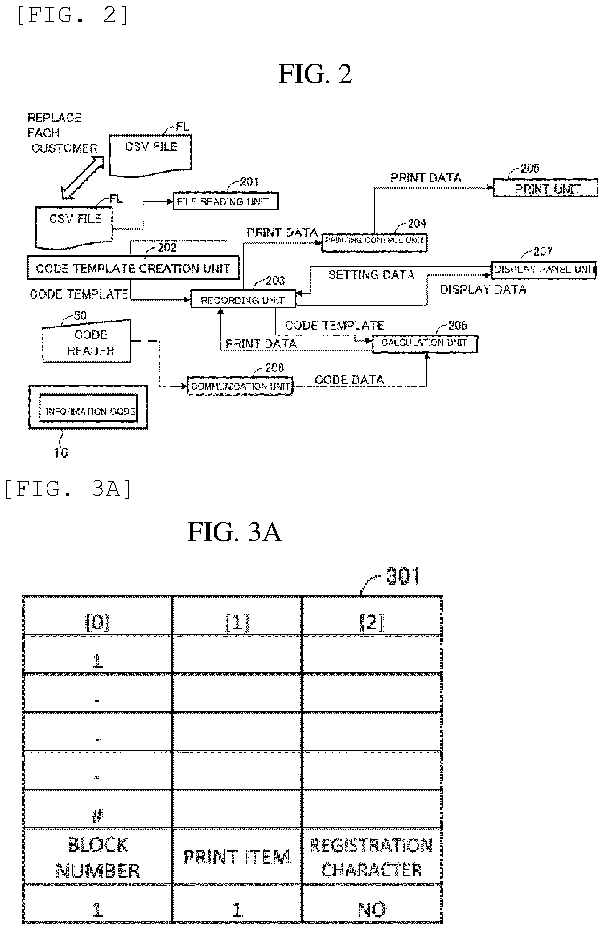

Fig. 2 is a functional block diagram showing an example configuration of the inkjet recording device. The main unit 20 of the inkjet recording device includes, as functional blocks, a file reading unit 201, a code template creation unit 202, a recording unit 203, a printing control unit 204, a print unit 205, a calculation unit 206, a display panel unit 207, and a communication unit 208.

The file reading unit 201 corresponds to the program stored in the HDD 31 and the data input/output interface 32. The code template creation unit 202 corresponds to the program stored in the HDD 31. The recording unit 203 corresponds to the RAM 29, the HDD 31 and the video RAM 35. The printing control unit 204 corresponds to the program stored in the ROM 33. The print unit 205 corresponds to the character signal generation circuit 37. The calculation unit 206 corresponds to the program stored in the HDD 31. The communication unit 208 corresponds to the serial communication interface circuit (C) 25 and the serial communication interface circuit (D) 26. The display panel unit 207 corresponds to the panel 28.

### (Code template registration operation)

The file reading unit 201 outputs the CSV file FL input from outside to the code template creation unit 202. The code template creation unit 202 creates a code template based on the CSV file FL. The code template creation unit 202 registers (memorizes or stores) the code template in the recording unit 203 (the HDD 31). It should be noted that the information for creating the code template, such as the CSV file FL, may be referred to as "code template information. Multiple code templates may be stored in the recording unit 203.

### (Printing operation)

The code reader 50 reads code data from an information code such as a bar code or a two-dimensional code, and outputs the read code data to the calculation unit 206 via the communication unit 208. The information code is attached to an object (e.g., the printing object 16). The code reader 50 may also be referred to as a "code reading unit" for convenience.

The calculation unit 206 acquires the code data read by the code reader 50 via the communication unit 208. The display panel unit 207 registers the print setting data entered via the operation screen displayed on the display panel unit 207 in the recording unit 203. The print setting data is data for setting character size (character height and width), character posture, writing position, the number of print steps, space between characters, print character type (font type, 2D barcode, barcode, etc.), etc.

The calculation unit 206 creates the print data based on the code data, the code template, and the print setting data, and records the print data in the recording unit 203. The calculation unit 206 converts the recorded print data into staircase waveform data and records the staircase waveform data (the converted print data) in the recording unit 203.

The calculation unit 206 creates the display data necessary to display the image representing the content to be printed by the print data and outputs it to the display panel unit 203.

The display panel unit 207 uses display data input from the recording unit 203 to display images representing the content to be printed by the print data on the display panel unit 207.

The printing control unit 204 retrieves the staircase wavy data (the converted print data) from the recording unit 203 and outputs it to the print unit 205. The print unit 205 executes the process for printing on the printing object 16 using the staircase waveform data.

### <Example of operation>

In order to facilitate understanding of the present invention, specific examples (first and second examples) of the operation of the inkjet recording device are described below.

### (First example of operation)

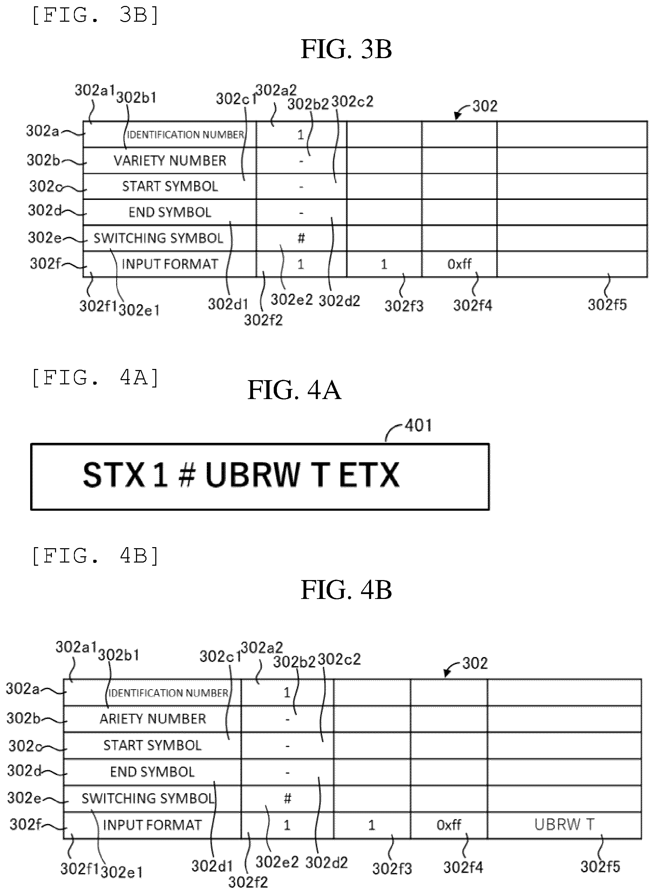

The first example of the operation of the inkjet recording device is described below. Fig. 3A shows a CSV file 301 that is an example of the CSV file FL used for the code template registration operation. Fig. 3B shows a code template 302 created based on the CSV file 301 of Fig. 3A. As described above, the code template 302 is created based on the CSV file 301 and registered (stored or memorized) in the recording unit 203 (the HDD 31).

The code template 302 includes an identification number 302a, a variety number 302b, a start symbol 302c, an end symbol 302d, a switching symbol 302e, and an input format 302f as rows containing columns containing the information necessary to analyze the code data.

The identification number 302a includes a row name storage column 302a1 and a template number storage column 302a2 as columns for storing information (values).

The row name storage column 302a1 stores the row name (identification information). The template number storage column 302a2 stores the identification number of the code template 302. In the example shown in Fig. 3B, the row name storage column 302a1 stores the "identification number," which is the name of this row. The template number storage column 302a2 stores "1," which is the identification number of this code template 302.

The variety number 302b includes a row name storage column 302b1 and a variety number storage column 302b2 as columns for storing information (values). The row name storage column 302b1 stores the row name (identification information). The variety number storage column 302b2 stores the variety number (identification number to identify the product) to which the code template 302 is applied. In the example shown in Fig. 3B, the "variety number," which is the name of this row, is stored in the row name storage column 302b1. Since the variety number is not used in this example, no information is stored in the variety number storage column 302b2.

The start symbol 302c includes a row name storage column 302c1 and a start symbol storage column 302c2 as columns for storing information (values). The row name storage column 302c1 stores the row name (identification information). The start symbol is stored in the start symbol storage column 302c2. In the example shown in Fig. 3B, the row name storage column 302c1 stores the "start symbol," which is the name of this row. Since the start symbol is not used in this example, no information is stored in the start symbol storage column 302c2.

The end symbol 302d includes a row name storage column 302d1 and an end symbol storage column 302d2 as columns for storing information (values). The row name storage column 302d1 stores the row name (identification information). The end symbol is stored in the end symbol storage column 302d2. In the example shown in Fig. 3B, the row name storage column 302d1 stores the "end symbol," which is the name of this row. In this example, the end symbol is not used, so no information is stored in the end symbol storage column 302d2.

The switching symbol 302e includes a row name storage column 302e1 and a switching symbol storage column 302e2 as columns for storing information (values). The row name (identification number) is stored in the row name storage column 302e1. The switching symbol is stored in the switching symbol storage column 302e2. In the example shown in Fig. 3B, the row name storage column 302e1 stores the "switching symbol," which is the name of this row. The switching symbol "#" is stored in the switching symbol storage column 302e2.

The input format 302f includes a row name storage column 302f1, a block number storage column 302f2, a print item storage column 302f3, a registration character storage column 302f4, and a print content storage column 302f5 as columns for storing information (values).

The row name storage column 302f1 stores the row name (identification number). The block number is stored in the block number storage column 302f2. The block number is the number of the block. The "block" is a location (character position range) in the code data between a delimiter symbol and a delimiter symbol or between a delimiter symbol and an end symbol (i.e., a location in the code data where the print content or the identification number of the registered character (registered character identification number) exists). Information used to identify the blocks, such as the delimiter symbol and the end symbol, is also referred to as "delimiter information". Each block contains (is marked with) the print content, registered character identification number, etc. Block numbers are assigned to each block in order from the start position to the end position of the code data, starting from 1.

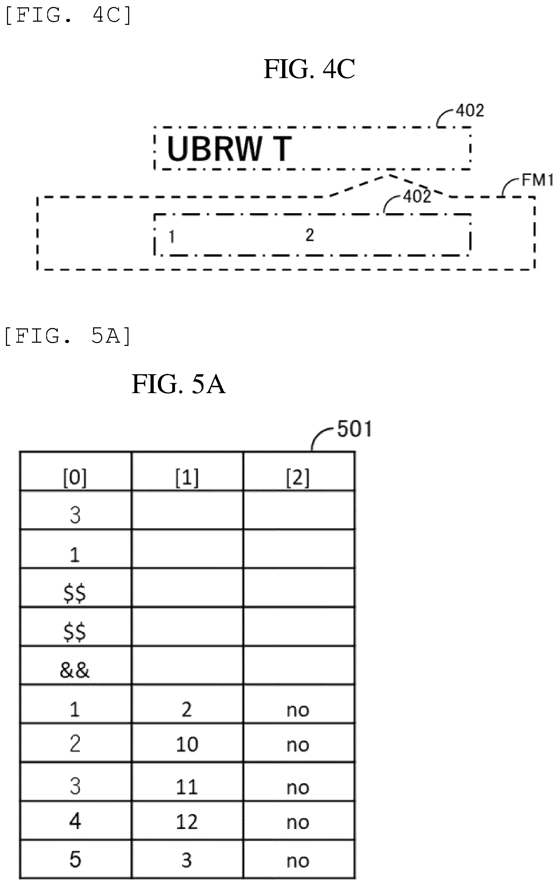

The print item storage column 302f3 stores the print item number corresponding to each print position (see inside the dotted frame FM1 in Fig. 4C), indicating each of the multiple print positions.

When the registered character is used, the registration character identification number corresponding to the registered character is stored in the registration character storage column 302f4, and when the registered character is not used, information (e.g., a character string) indicating that the registered character is not used is stored in it. The registered characters are characters (symbols) such as •,∘, etc., stored in advance in the recording unit 203, and the characters (symbols) associated with the registered character identification number are stored as registered characters in the recording unit 203 (the HDD 31).

The print content storage column 302f5 stores the print content stored in the block in the code data corresponding to the block number stored in the corresponding block number storage column 302f2, based on the result of the code data analysis.

In the example shown in Fig. 3B, the row name storage column 302f1 stores "input format," which is the name of this row. The block number storage column 302f2 stores "1", which is the block number. The print item storage column 302f3 stores "1", which is the print item number. The registration character storage column 302f4 stores "0xff", which is information (character string) indicating that the registration character is not used. The print content is not stored in the print content storage column 302f5 because this is the state before code data analysis.

When the code data 401 shown in Fig. 4A is acquired by reading the information code by the code reader 50, the calculation unit 206 acquires the code template 302 corresponding to the identification number "1" at the beginning of the sentence of the code data 401 (position after the transmission symbol (STX) and just before the switching symbol "#") from the recording unit 203. The calculation unit 206 analyzes the code data 401 using the code template 302.

The calculation unit 206 acquires the print content "UBRW T" of the block (the block between the switching symbol "#" and the transmission symbol (ETX)) with block number 1 from the code data 401 by analyzing the code data 401, and stores the acquired print content "UBRW T" in the print content storage column 302f5 of the input format 302f on the row with the block number "1" stored in the block number storage column 302f2. The transmission symbol (ETX) is defined as the end symbol (regarded as the end symbol).

As a result, the calculation unit 206 creates the code template (Fig. 4B) that has stored information such as the print content in the print content storage column 302f5 of the input format 302f. Hereafter, the code template with information such as the print content stored in the print content storage column of the input format based on the analysis results of code data 401 is referred to as an "information stored code template.

The calculation unit 206 creates print data based on the information stored code template 302 and other separately set print setting data, and stores (memorizes or stores) the data in the recording unit 203.

In the example of FIG. 4A and FIG. 4B, the print data is data for printing the print content "UBRW T" at the position of print item number 1 in the print area 402 of the printing object 16 shown in the dotted frame FM1, as shown in FIG. 4C, in accordance with the print setting data (character type, character size, etc.) specified for print item number 1 (separately set).

The printing control unit 204 reads the staircase wavy data (converted print data) from the recording unit 203 and outputs it to the print unit 205. The print unit 205 executes the process for printing on the printing object 16 based on the staircase waveform data (converted print data). Thereby, as shown in Fig. 4C, the print content is printed on the printing object 16 according to the print data.

### (Second example of operation)

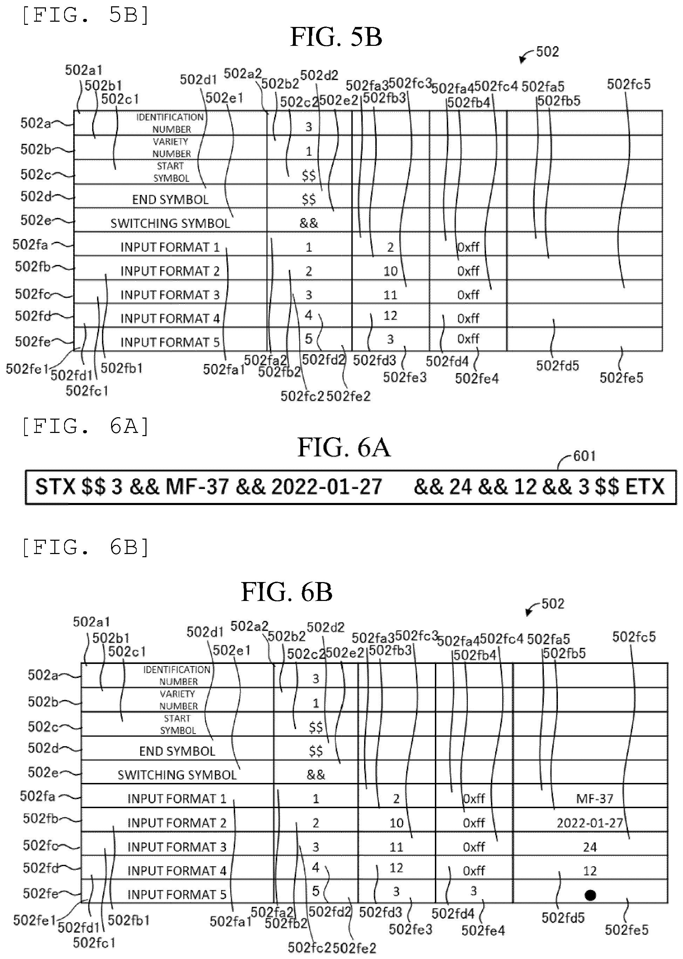

A second example of the operation of the inkjet recording device is described below. Fig. 5A shows a CSV file 501 that is another example of the CSV file FL. Fig. 5B shows a code template 502 created based on the CSV file 501 of Fig. 5A. As described above, the code template 502 is created based on the CSV file 501 and registered (memorized or stored) in the recording unit 203 (the HDD 31).

The code template 502 includes an identification number 502a, a variety number 502b, a start symbol 502c, an end symbol 502d, a switching symbol 502e, an input format 1 502fa, an input format 2 502fb, an input format 3 502fc, an input format 4 502fd, and an input format 5 502fe, as rows including columns in which information required for analyzing code data is stored.

The identification number 502a includes a row name storage column 502a1 and a template number storage column 502a2 as columns for storing information (values).

The row name storage column 502a1 stores the row name (identification information). The template number storage column 502a2 stores the identification number of the code template 502. In the example shown in Fig. 5B, the row name storage column 502a1 stores the "identification number," which is the name of this row. The template number storage column 502a2 stores "3," which is the identification number of this code template 502.

The variety number 502b includes a row name storage column 502b1 and a variety number storage column 502b2 as columns for storing information (values). The row name storage column 502b1 stores the row name (identification information). The variety number storage column 502b2 stores the variety number (identification number to identify the product) to which the code template 502 is applied. In the example shown in Fig. 5B, the "variety number," which is the name of this row, is stored in the row name storage column 502b1. The variety number storage column 502b2 stores "1," which is the variety number.

The start symbol 502c includes a row name storage column 502c1 and a start symbol storage column 502c2 as columns for storing information (values). The row name storage column 502c1 stores the row name (identification information). The start symbol is stored in the start symbol storage column 502c2. In the example shown in Fig. 5B, the row name storage column 502c1 stores the "start symbol," which is the name of this row. The start symbol "$$" is stored in the start symbol storage column 502c2.

The end symbol 502d includes a row name storage column 502d1 and an end symbol storage column 502d2 as columns for storing information (values). The row name storage column 502d1 stores the row name (identification information). The end symbol is stored in the end symbol storage column 502d2. In the example shown in Fig. 5B, the row name storage column 502d1 stores the "end symbol," which is the name of this row. The end symbol "$$" is stored in the end symbol storage column 502d2.

The switching symbol 502e includes a row name storage column 502e1 and a switching symbol storage column 502e2 as columns for storing information (values). The row name storage column 502e1 stores the row name (identification number). The switching symbol is stored in the switching symbol storage column 502e2. In the example shown in Fig. 5B, the row name storage column 502e1 stores the "switching symbol," which is the name of this row. The switching symbol "&&" is stored in the switching symbol storage column 502e2.

The input format 1 502fa includes a row name storage column 502fa1, a block number storage column 502fa2, a print item storage column 502fa3, a registration character storage column 502fa4, and a print content storage column 502fa5 as columns for storing information (values). In the example shown in Fig. 5B, the row name storage column 502fa1 stores the name of this row, "input format 1". The block number storage column 502fa2 stores "1", which is the block number. The print item storage column 502fa3 stores "2", which is the print item number. The registration character storage column 502fa4 stores"0xff", which is information (character string) indicating that the registration character is not used. The print content are not stored in the print content storage column 502fa5, since this is the state before code data analysis.

Input format 2 502fb includes a row name storage column 502fb1, a block number storage column 502fb2, a print item storage column 502fb3, a registration character storage column 502fb4, and a print content storage column 502fb5 as columns for storing information (values).

In the example shown in Fig. 5B, the row name storage column 502fb1 stores "input format 2," which is the name of this row. The block number storage column 502fb2 stores "2", which is the block number. The print item storage column 502fb3 stores "10", which is the print item number. The registration character storage column 502fb4 stores "0xff", which is information (character string) indicating that the registration character is not used. The print content is not stored in the print content storage column 502fb5, since this is the state before code data analysis.

Input format 3 502fc includes a row name storage column 502fc1, a block number storage column 502fc2, a print item storage column 502fc3, a registration character storage column 502fc4, and a print content storage column 502fc5 as columns for storing information (values). In the example shown in Fig. 5B, the row name storage column 502fc1 stores the name of this row, "input format 3". The block number storage column 502fc2 stores "3", which is the block number. The print item storage column 502fc3 stores "11", which is the print item number. The registration character storage column 502fc4 stores "0xff", which is information (character string) indicating that the registration character is not used. The print content is not stored in the print content storage column 502fc5, since this is the state before code data analysis.

The input format 4 502fd includes a row name storage column 502fd1, a block number storage column 502fd2, a print item storage column 502fd3, a registration character storage column 502fd4, and a print content storage column 502fd5 as columns for storing information (values). In the example shown in Fig. 5B, the row name storage column 502fd1 stores the name of this row, "input format 4". The block number storage column 502fd2 stores "4", which is the block number. The print item storage column 502fd3 stores "12", which is the print item number. The registration character storage column 502fd4 stores "0xff", which is information (character string) indicating that the registration character is not used. The print content is not stored in the print content storage column 502fd5, since this is the state before code data analysis.

Input format 5 502fe includes a row name storage column 502fe1, a block number storage column 502fe2, a print item storage column 502fe3, a registration character storage column 502fe4, and a print content storage column 502fe5 as columns for storing information (values). In the example shown in Fig. 5B, the row name storage column 502fe1 stores the name of this row, "input format 5". The block number storage column 502fe2 stores "5", which is the block number. The print item storage column 502fe3 stores "3", which is the print item number. The registration character storage column 502fe4 stores "0xff", which is information (character string) indicating that the registration character is not used. The print content is not stored in the print content storage column 502fe5, since this is the state before code data analysis.

When code data 601 shown in Fig. 6A is acquired by reading the information code by the code reader 50, the calculation unit 206 acquires the code template 502 corresponding to the identification number "3" at the beginning of the sentence of the code data 601 (the position after the transmission symbol (STX) and just before the switching symbol "&&") from the recording unit 203. The calculation unit 206 analyzes the code data 601 using the code template 502.

The calculation unit 206 acquires the print content "MF-37" of the block with block number 1 from the code data 601 by analyzing the code data 601, and stores the acquired print content "MF-37" in the print content storage column 502fa5 of the input format 1 502fa of the row with block number "1" stored in the block number storage column 502fa2.

Furthermore, the calculation unit 206 acquires the print content "2022-01-27" of the block with block number 2 from the code data 601 by analyzing the code data 601, and stores the acquired print content "2022-01-27" in the print content storage column 502fb5 of the print content of the input format 2 502fb of the row with block number "2" stored in the block number storage column 502fb2.

Furthermore, the calculation unit 206 acquires the print content "24" of the block with block number 3 from the code data 601 by analyzing the code data 601, and stores the acquired print content "24" in the print content storage column 502fc5 of the input format 3 502fc of the row with block number "3" stored in the block number storage column 502fc2.

Furthermore, the calculation unit 206 acquires the print content "12" of the block with block number 4 from the code data 601 by analyzing the code data 601, and stores the acquired print content "12" in the print content storage column 502fd5 of the input format 4 502fd of the row with block number "4" stored in the block number storage column 502fd2.

Furthermore, the calculation unit 206 acquires the registration number "3" of the block with block number 5 from the code data 601 by analyzing the code data 601, and stores the registration character "•" corresponding to the registration number "3" acquired in the print content storage column 502fe5 of the input format 5 502fe of the row with block number "5" stored in the block number storage column 502fe2.

As a result, the calculation unit 206 creates an information stored code template 502 (Fig. 6B) that has stored the print content, etc. in each of the print content storage columns 502fa5 through 502fe5 of input format 1 502fa through input format 5 502fe.

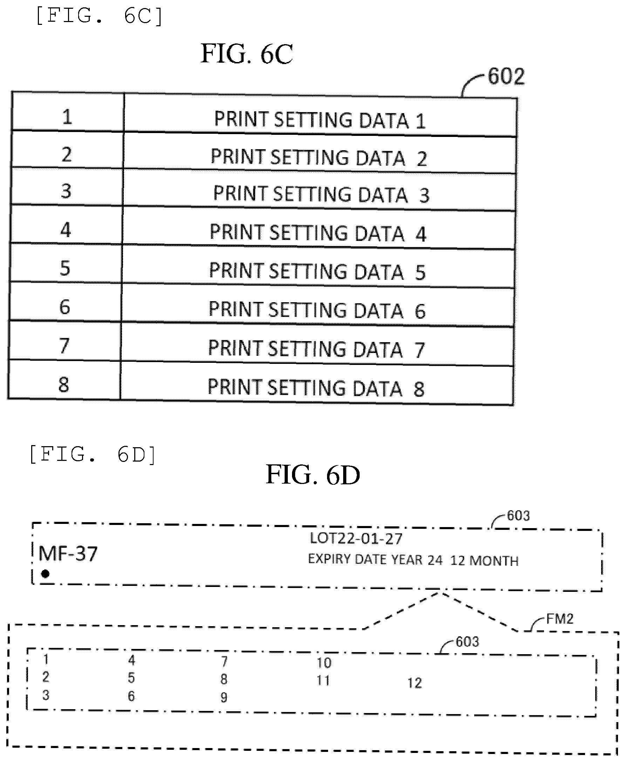

The calculation unit 206 records (memorizes or stores) print data in the recording unit 203 based on the information stored code template 502 and other separately set print setting data indicating character type, character size, etc. for each print item number. It should be noted that the calculation unit 206 acquires the print setting data (e.g., print setting data 1) associated with "1," which is the type number stored in the variety number storage column 502b2, from a print setting data table 602 shown in Fig. 6C as the above print setting data.

In the case of the examples in Figs. 6A and 6B, this print data would be as follows
That is, the print data is the data to print the print content "MF-37" on the position (see dotted frame FM2 in Fig. 6D) corresponding to print item number 2 of a print area 603 of the printing object 16 in accordance with the print setting data (separately set print setting data (character type, character size, etc.)) specified for print item number 2 based on the input format 1 502fa.

The print data is the data indicating the print content "2022-01-27" to be printed on the position (see dotted frame FM2 in Fig. 6D) corresponding to print item number 10 of a print area 603 of the printing object 16 in accordance with the print setting data (separately set print setting data (character type, character size, etc.)) specified for print item number 10 based on the input format 2 502fb. It should be noted that "LOT" in the figure is the character set separately by the print setting data.

The print data is the data indicating the print content "24" to be printed on the position (see dotted frame FM2 in Fig. 6D) corresponding to print item number 11 of a print area 603 of the printing object 16 in accordance with the print setting data (separately set print setting data (character type, character size, etc.)) specified for print item number 11 based on the input format 3 502fc. It should be noted that the "expiry date year" in the figure is a character set separately by the print setting data.

The print data is the data indicating the print content "12" to be printed on the position (see dotted frame FM2 in Fig. 6D) corresponding to print item number 12 of a print area 603 of the printing object 16 in accordance with the print setting data (separately set print setting data (character type, character size, etc.)) specified for print item number 12 based on the input format 4 502fd. It should be noted that the "month" in the figure is a character set separately by the print setting data.

The print data is the data indicating a registered character "•" to be printed on the position (see dotted frame FM2 in Fig. 6D) corresponding to print item number 3 of a print area 603 of the printing object 16 in accordance with the print setting data (separately set print setting data (character type, character size, etc.)) specified for print item number 3 based on the input format 5 502fe.

The printing control unit 204 reads the staircase wavy data (converted print data) from the recording unit 203 and outputs it to the print unit 205. The print unit 205 executes the process for printing on the printing object 16 based on the staircase waveform data (converted print data). As shown in Fig. 6D, the print content is printed on the printing object 16 in accordance with the print data.

### <Specific operation>

### (Registration process)

Details of the code template registration operation (process) described above are explained below.

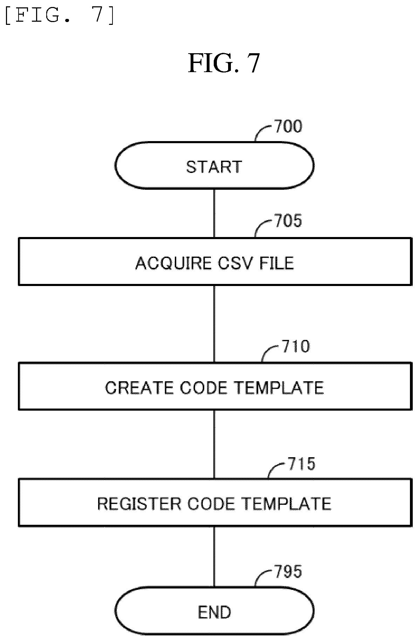

Fig. 7 is a flowchart showing the processing flow of the code template registration process executed by the code template creation unit 202. The code template creation unit 202 starts processing from step 700, executes steps 705 through 715 described below in order, and then proceeds to step 795 to temporarily terminate this processing flow.

Step 705: The code template creation unit 202 acquires the CSV file FL read from the outside by the file reading unit 201.

Step 710: The code template creation unit 202 creates a code template based on the CSV file FL.

Step 715: The code template creation unit 202 registers (memorizes or stores) the created code template in the recording unit 203.

It should be noted that multiple code templates may be stored in the recording unit 203 (the HDD 31) by performing this registration process multiple time.

### (Printing operation (printing process))

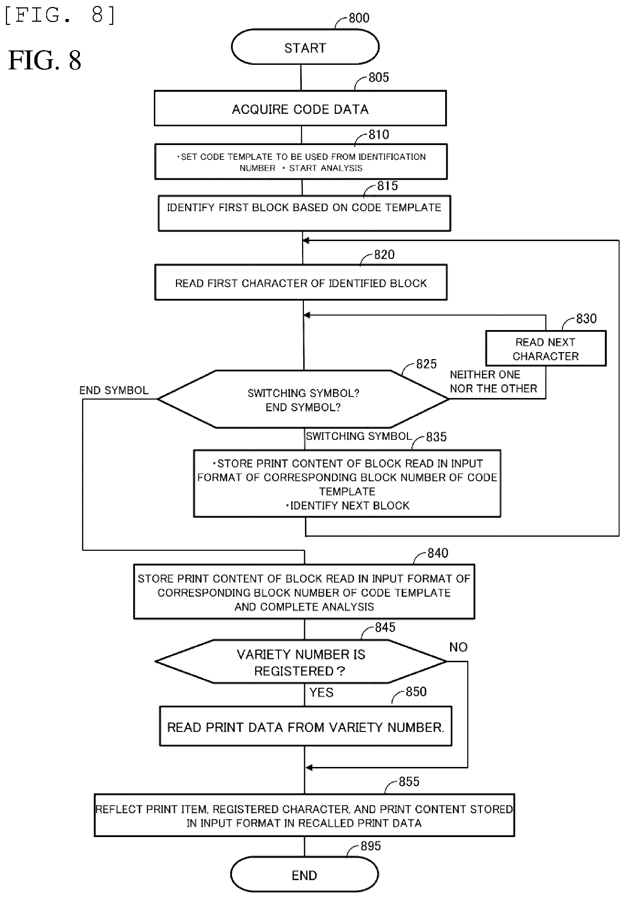

Details of the printing operation (printing process) described above are explained below. Fig. 8 is a flowchart showing the processing flow of the printing operation executed by the calculation unit 206. The calculation unit 206 starts processing from step 800, executes steps 805 through 820 described below in sequence, and then proceeds to step 825.

Step 805: The calculation unit 206 acquires the code data read from the information code by the code reader 50 via the communication unit 208.

Step 810: Based on the identification number of the code data, the calculation unit 206 sets the code template corresponding to the identification number stored in the recording unit 203 as the code template to be used, and starts analyzing the code data using the code template.

Step 815: The calculation unit 206 identifies the first block based on the code template. As mentioned above, the "block" is the space between the delimiter symbol and the delimiter symbol or between the delimiter symbol and the end symbol in the code data. Each block contains (is marked with) the print content, registered character identification number, etc. Block numbers are assigned to each block in order from the start position to the end position of the code data, starting from 1.

Step 820: The calculation unit 206 reads the first character of the identified block and stores it in the RAM 29.

The calculation unit 206 proceeds to step 825 to determine whether the character read is any of the switching symbol and the end symbol.

When the character read is neither the switching symbol nor the end symbol, the calculation unit 206 proceeds to step 830, reads the next character, and again proceeds to step 825 to perform the previously described process.

When the character read is the switching symbol, the calculation unit 206 proceeds to step 835 to store the print content (characters stored in the RAM 29) of the block read in the print content storage column of the row of the input format of the corresponding block number of the code template, and thereafter, erases the print content (characters stored in the RAM 29) stored in the RAM 29. When the character of the block read is a registered character identification number, the registered character identification number of the block read is stored in the registered character storage column of the input format of the corresponding block number of the code template, and the registered character corresponding to the registered character identification number is stored in the print content storage column of the same row, and thereafter, the registration character identification number stored in the RAM 29 (the character stored in the RAM 29) is erased. The calculation unit 206 identifies the next block and returns to step 820 to perform the previously described process.

When the character read at step 825 is the end symbol, the calculation unit 206 proceeds to step 840, stores the print content of the block read (characters stored in RAM) in the print content storage column of the input format row of the corresponding block number of the code template, thereafter, erases the print content (characters stored in RAM) stored in the RAM 29, and completes the code data analysis process. This creates the information stored code template as described above.

Thereafter, the calculation unit 206 then proceeds to step 845 to determine whether the variety number is registered in the information stored code template.

When the variety number is registered in the information stored code template, the calculation unit 206 makes a "YES" determination at step 845 and proceeds to step 850, reads the print setting data associated with the variety number in the print setting data table 602, and proceeds to step 855.

When proceeding to step 855, the calculation unit 206 creates print data by reflecting the print item (print item number) of the input format in which the print content (registered characters) is stored and print content and/or registered character in the read print setting data and records (stores or memorizes) the print data in the recording unit 203.

When the variety number is not registered in the code template, the calculation unit 206 makes a "NO" determination at step 845 and proceeds directly to step 855. When proceeding to step 855, the calculation unit 206 creates print data by reflecting the print item (print item number) of the input format in which the print content (registered characters) is stored and print content and/or registered character in the print setting data set by panel operation or the like, and records the print data in the recording unit 203.

As described above, the print data (the converted print data (staircase wavy data)) recorded in the recording unit 203 is read by the printing control unit 204 and output to the print unit 205. The print unit 205 prints the print content on the printing object 16 according to the print data based on the staircase wavy data (the converted print data).

### <Effect>

As explained above, the inkjet recording device according to the embodiment of the present invention can print the desired print content and layout of the print content based on the code data and the code template read from the information code, simply by preparing and registering the information code and the code template corresponding to the desired print content and layout of the print content in advance. Therefore, the inkjet recording device can easily handle printing with various print contents and layouts.

### <<Examples of variation>>

The present invention is not limited to the above embodiments, and various variations may be adopted within the scope of the present invention. In the above embodiment, the object to which the information code to be read is attached is not limited to the printing object. For example, the object to which the information code to be read is attached may be a paper medium such as a specification sheet.

In the above embodiment, a code template 502 in which the variety number is not stored in the variety number storage column 502b2 of the variety number designation 502b may be created from the CSV file. In this case, the variety number may be embedded in the information code, and the code data read from the information code may be analyzed to store the variety number in the variety number storage column 502b2 of the variety number designation 502b of the code template 502.

In the above embodiment, the code template 502 with the registration number stored in the registration character storage column 502fe4 of the input format 502fe may be created from the CSV file.

### Reference Signs List

21...Main MPU, 22...Sub MPU, 28...panel, 29...RAM, 30...HDD interface circuit, 31...HDD, 32...data input/output interface. 33...ROM, 34...RAM, 35...video RAM, 36...print object detection circui, 37...character signal generation circuit, 38...print object detection sensor, 50...code reader

## Claims

1. An inkjet recording device comprising:
a code reading unit that reads code data from an information code;
a storage unit that stores a code template that defines a position of information indicating a print target in the code data and a print position of the print target with respect to a printing object, the code template being used in analysis of the code data;
a control unit that creates print data for printing the print target on the print position based on the code data and the code template corresponding to the code data.

2. The inkjet recording device according to claim 1,
wherein,
the code template includes:
delimiter information to identify a block, the block being a character position range where a print content indicating the print target in the code data or registered character identification information of a registered character is present; and
an input format in which input format identification information, identification information of the block in the code data, a print item indicating a print position of the print content or a registered character corresponding to the registered character identification information that is present in the block, a registered character identification information storage area storing the registered character identification information, and an information storage area storing the print content or the registered character corresponding to the registered character identification information that is present in the block are associated with.

3. The inkjet recording device according to claim 2,
wherein,
the control unit is configured to:
store, based on results of analyzing the code data using the delimiter information,
the print content present in the block or the registered character identification information present in the block and the registered character corresponding to the registered character identification information in the code template, to thereby create an information stored code template;
and
create the print data based on the information stored code template.

4. The inkjet recording device according to claim 1,
wherein,
the code template further includes code template identification information to identify the code template; and
the control unit is configured to:
acquire the code template corresponding to the code template identification information from the storage unit based on the code template identification information included in the code data; and
create the print data by using the acquired code template.

5. The inkjet recording device according to claim 1,
wherein,
the control unit is configured to:
create the code template based on the code template information for creating the code template; and
register the code template in the storage unit.

6. The inkjet recording device according to claim 5,
wherein,
the control unit is configured to:
read the code template information from an external source, and
create the code template by using the code template information read from the external source.

7. The inkjet recording device according to claim 3,
wherein,
the control unit is configured to:
identify the block of the code data based on the code template; and
store the information from a start position of the identified block to the position immediately before the delimiter information in the code template as the print content or the registered character identification information.

8. The inkjet recording device according to claim 3,
wherein,
the delimiter information includes a delimiter symbol and an end symbol;
and
the control unit is configured to:
identify the block of the code data based on the code template;
store the information from a start position of the identified block to a position immediately before the delimiter symbol or a position immediately before the end symbol in the code template as the print content or the registered character identification information;
thereafter, when the delimiter symbol is present at the position immediately after the last position of the identified block, specify the next block;
execute process for storing the information from a start position of the identified block to a position immediately before the delimiter symbol or a position immediately before the end symbol in the code template as the print content or the registered character identification information;
when the end symbol is present at a position immediately after the last character position of the identified block, terminate the analysis of the code data; and
use the code template with the information at a time of termination as the information stored code template.

9. The inkjet recording device according to claim 3,
wherein,
the control unit is configured to:
call up, when a variety number is registered in the information stored code template after the analysis of the code data is completed, a print setting data corresponding to the variety number; and
create the print data based on the information stored code template and the print setting data.

10. The inkjet recording device according to claim 1,
wherein,
the information code is attached to the printing object.
